# EUROPÄISCHE PATENTSCHRIFT

(11) **EP 3 037 395 B1**
(45) Veröffentlichungstag und Bekanntmachung des Hinweises auf die Patenterteilung: **31.01.2018**
(21) Anmeldenummer: 14200151.0
(22) Anmeldetag: 23.12.2014
(51) Int. Cl.: C05B 13/00, C05B 15/00, C10J 3/32, C10B 49/04, C10B 53/02

(54) **Verfahren und Vorrichtung zur Gewinnung eines Phosphor in für Pflanzen leicht verwertbarer Form enthaltenden Produkts aus einem Schüttgut zumindest teilweise organischen Ursprungs**
Method and device for obtaining a product containing phosphorus in a form that is easily used by plants from bulk material of at least partially organic origin
Procédé et dispositif de production d'un produit contenant du phosphore sous une forme facile à utiliser pour les plantes provenant d'un produit en vrac d'origine au moins partiellement organique

(43) Veröffentlichungstag der Anmeldung: 29.06.2016
(73) Patentinhaber: TSP GmbH, 73730 Esslingen (DE)
(72) Erfinder: Bux, Markus, Dr., 72124 Pliezhausen (DE); Ritterbusch, Steffen, Dr., 70563 Stuttgart (DE); Schmalzbauer, Ralf, 73730 Esslingen-Zell (DE); Conrad, Tilo, Dr., 72622 Nürtingen (DE)
(74) Vertreter: Dr. Gassner & Partner mbB

(56) Entgegenhaltungen:
- EP-A2- 0 309 387
- EP-A2- 2 792 949
- WO-A1-01/05913
- WO-A1-2006/131281
- WO-A1-2014/158058
- Schick J et al: "Zum Düngepotential thermochemisch behandelter Klärschlammaschen - das EU-Prokekt SUSAN", Mitteilungen des Julius-Kühn-Instituts, Bd. 419 1. Januar 2008 (2008-01-01), Seiten 76-82, XP55191641, Gefunden im Internet: URL:https://openagrar.bmel-forschung.de/se rvlets/MCRFileNodeServlet/Document_derivat e_00006241/Mitt-JKI_419-80.pdf [gefunden am 2015-05-26]

## Beschreibung

Die Erfindung betrifft ein Verfahren und eine Vorrichtung zur Gewinnung eines Phosphor in für Pflanzen leicht verwertbarer Form enthaltenden Produkts beim Vergasen eines, insbesondere rieselfähigen, Schüttguts zumindest teilweise organischen Ursprungs unter zumindest partieller Oxidation des Schüttguts. Der organische Ursprung kann dabei zumindest ein Mensch, zumindest ein Tier, zumindest eine Pflanze, zumindest eine Alge und/oder zumindest ein Pilz sein. Der organische Ursprung kann auch ein mikrobieller Ursprung sein. Alle Schüttgüter zumindest teilweise organischen Ursprungs enthalten Kohlenstoff und Phosphor. Das Schüttgut kann z. B. getrocknete(n) oder zumindest teilgetrockneten Klärschlamm, Tierkot, Algen oder Torf oder Braunkohle umfassen. Das Schüttgut kann einen anorganischen Anteil, z. B. in Form von Sand oder Mineralien, von bis zu 60 Gew.-% aufweisen.

Bei der Abwasserreinigung entstehender Klärschlamm wurde bislang in der Landwirtschaft oder bei der Rekultivierung zu Düngezwecken eingesetzt, in Monoverbrennungsanlagen verbrannt oder in Mitverbrennungsanlagen, wie in Kohlekraft- oder Zementwerken, mitverbrannt. Gegen die Entsorgung in der Landwirtschaft oder bei der Rekultivierung spricht, dass der Klärschlamm im Allgemeinen relativ viele organische und anorganische Schadstoffe enthält.

Gegen die Verbrennung in Mitverbrennungsanlagen spricht, dass der in dem Klärschlamm enthaltene Phosphor für eine Nutzung in der Landwirtschaft verloren geht. Bei einer bei der Monoverbrennung üblicherweise herrschenden Temperatur von über 850°C beginnt dabei entstehende Asche zunächst zu erweichen und bei einer Temperatur von über 950°C sogar zu schmelzen bzw. zu verglasen. Der in der Asche enthaltene Phosphor liegt dann nicht in einer für Pflanzen verwertbaren Form vor. Für eine Verbrennung erfordern die Bundes-Immissionsschutzverordnungen der Bundesrepublik Deutschland jedoch eine Mindesttemperatur von 850°C für mindestens zwei Sekunden. Die durch Verbrennung eines Festbrennstoffs unter solchen Bedingungen erhaltene Asche enthält Phosphor jedoch nicht in einer für Pflanzen leicht verwertbaren Form.

Weiterhin sind eine Pyrolyse umfassende Verfahren bekannt, welche sich auch zur Umsetzung von Klärschlamm eignen. Da hierbei die Verbrennung des entstehenden Gases vom Bereich der Pyrolyse räumlich getrennt ist, kann mit einem solchen Verfahren die Pyrolyse bei verhältnismäßig geringer Temperatur erfolgen. Die Verbrennung des entstehenden Gases kann dann bei mindestens 850°C erfolgen, wobei die Verbrennungsgase für mindestens zwei Sekunden diese Temperatur erreichen, so dass die Vorschriften der Bundes-Immissionsschutzverordnungen eingehalten werden können.

Aus der EP 2 792 949 A2 ist ein Verfahren zur Gewinnung von phosphorhaltigen Verbindungen aus Klärschlamm bekannt, bei dem der Klärschlamm zu einer Asche verbrannt wird, die Asche zur Selektierung einer Aschefraktion mit einer Partikelgröße unterhalb einer vorgebbaren Maximalpartikelgröße mechanisch klassiert wird und die selektierte Aschefraktion zur Gewinnung von phosphorhaltigen Verbindungen behandelt wird. Die Behandlung kann die Zugabe einer Säure zur Reduktion des pH-Werts, das Abtrennen eines ersten Feststoffanteils, die Zugabe einer Lauge zur Erhöhung des pH-Werts, die Abtrennung eines zweiten Feststoffanteils, die Zugabe einer Calciumverbindung und das Abtrennen eines calciumphosphathaltigen Feststoffanteils umfassen.

Aus der DE 10 2005 026 764 B3 sind ein Festbettvergaser und ein Verfahren zur Vergasung von Festbrennstoff bekannt. Dieser Festbettvergaser umfasst eine Reaktionskammer zur Aufnahme einer Schüttung aus Festbrennstoff sowie entstehenden Pyrolysekokses und entstehender Asche, eine Brennstoffeinfülleinrichtung zur Befüllung der Reaktionskammer mit Festbrennstoff von oben, eine Ascheabzugseinrichtung zum Abzug entstehender Asche nach unten, eine Heizkammer, in der eine Heizeinrichtung zur Erzeugung von Wärmestrahlung angeordnet und die über ein Heizfenster mit der Reaktionskammer verbunden ist und eine Gasabzugseinrichtung zur Ausleitung entstehender gasförmiger Reaktionsprodukte. In der Reaktionskammer kann eine Rühreinrichtung angeordnet sein.

Das aus der DE 10 2005 026 764 B3 bekannte Verfahren ist ein Verfahren zur Vergasung von Festbrennstoffen in einer Reaktionskammer in einer Schüttung, auf die Festbrennstoff oben aufgegeben und die absteigend bewegt wird. Dabei wird die Ausbildung einer die Schüttung oben bedeckenden dünnen Festbrennstoffschicht bewirkt und die Schüttung von unten nach oben durch Dampf, Luft oder ein Dampf/Luft-Gemisch durchströmt. Die Festbrennstoffschicht wird in der Reaktionskammer einer allothermen Pyrolyse durch Fremdwärmezufuhr aus einer Heizkammer unterworfen, in der eine Heizeinrichtung mit einem Brenner und/oder Strahlrohr angeordnet ist. Die entstehenden Pyrolysegase werden durch die Heizkammer abgezogen, deren Temperatur höher ist als die Temperatur in der Reaktionskammer. Die Temperatur in der Reaktionskammer kann durch Beeinflussung der Luft- und/oder Dampfzufuhr geregelt werden. Die Temperatur in der Pyrolysezone kann auf 500°C bis 900°C eingestellt werden. Als Pyrolysegut können stückige, geschredderte, pelletierte oder anderweitig vorkonditionierte kohlenstoffhaltige organische Stoffe dienen. Das Verfahren ist sowohl technisch als auch energetisch verhältnismäßig aufwendig.

Der nach der Pyrolyse verbleibende Rückstand kann jedoch partiell erweichte und sogar verglaste Asche enthalten, bei welcher die Verfügbarkeit des darin enthaltenen Phosphors reduziert ist. Weiterhin kann es durch eine Versinterung des Festbrennstoffs zur Klumpenbildung und/oder Verstopfung in der Reaktionskammer kommen. Weiterhin kann sich in dem bei dem Verfahren erhaltenen Rückstand nicht vollständig umgesetzter Festbrennstoff finden. Darin können organische Schadstoffe enthalten sein, die durch die nicht vollständige Umsetzung nicht zerstört worden sind.

Aufgabe der vorliegenden Erfindung ist es, ein Verfahren und eine Vorrichtung anzugeben, welche es mit verhältnismäßig geringem technischen Aufwand und mit verhältnismäßig wenig oder keiner von außen zugeführter Energie ermöglichen, ein, insbesondere rieselfähiges, Schüttgut zumindest teilweise organischen Ursprungs zu vergasen, so dass ein verhältnismäßig homogenes Produkt entsteht, in welchem enthaltener Phosphor in einer für Pflanzen leicht verwertbaren Form vorliegt.

Die Aufgabe wird durch die Merkmale der Patentansprüche 1 und 14 gelöst. Zweckmäßige Ausgestaltungen ergeben sich aus den Merkmalen der Patentansprüche 2 bis 13 und 15.

Erfindungsgemäß ist ein Verfahren zur Gewinnung eines Phosphor in für Pflanzen leicht verwertbarer Form enthaltenden Produkts beim Vergasen eines, insbesondere rieselfähigen, Schüttguts zumindest teilweise organischen Ursprungs unter zumindest partieller Oxidation eines organischen Anteils des Schüttguts vorgesehen. Der organische Anteil des Schüttguts stammt dabei ursprünglich aus zumindest einem Menschen, zumindest einem Tier, zumindest einer Pflanze, zumindest einer Alge, zumindest einem Pilz und/oder zumindest einem Mikroorganismus. Der organische Anteil des Schüttguts kann daraus beispielsweise durch chemische oder biologische Umsetzung entstanden sein. Der organische Anteil des Schüttguts kann zumindest 40 Gew.-%, insbesondere zumindest 50 Gew.-%, insbesondere zumindest 60 Gew.-%, insbesondere zumindest 70 Gew.-%, insbesondere zumindest 80 Gew.-%, insbesondere zumindest 90 Gew.-%, insbesondere 100 Gew.-% betragen. Das Schüttgut kann jedoch auch anorganische Bestandteile, wie z. B. Sand oder Mineralien enthalten. In dem Schüttgut können Kohlenstoff und der Phosphor in beliebigen Verbindungen vorliegen. Phosphor in für Pflanzen leicht verwertbarer Form liegt im Allgemeinen in Form von Phosphat oder Phosphatresten innerhalb einer Struktur vor, aus welcher das Phosphat oder die Phosphatreste durch Wasser herausgelöst werden können. Das Verfahren umfasst die folgenden Schritte:
a) Einbringen einer Schüttung des Schüttguts in einen Reaktionsraum eines Reaktors,
b) kontinuierliches oder intermittierendes Bewegen der Schüttung,
c) Erwärmen des Schüttguts auf der Oberseite der Schüttung auf eine Temperatur, bei der es zu einer Pyrolyse des organischen Anteils des Schüttguts kommt,
d) Einblasen von Luft oder eines sonstigen Sauerstoff enthaltenden Gasgemischs über mindestens eine Einblasöffnung in mindestens einem sich kontinuierlich oder intermittierend durch die Schüttung bewegenden Werkzeug in die Schüttung, wobei die Luft, das Gasgemisch, entstehendes Gas und/oder durch dessen Verbrennung oberhalb der Schüttung entstehendes Verbrennungsgas über mindestens eine Gasauslassöffnung oberhalb der Schüttung oder die Luft, das Gasgemisch und/oder entstehendes Gas über mindestens eine Gasauslassöffnung im oberen Viertel der Schüttung aus dem Reaktionsraum ausgeleitet wird, wobei sich das entstehende Gas in der Schüttung aufsteigend bewegt, wobei das Einblasen der Luft oder des sonstigen Sauerstoff enthaltenden Gasgemischs so geregelt wird, dass die Menge an Luft oder des Gasgemischs nur zu einer unvollständigen Oxidation des organischen Anteils des Schüttguts im Reaktionsraum ausreicht, und
e) Zuführen des Schüttguts in den Reaktionsraum von oberhalb oder im oberen Viertel der Schüttung und Abführen von nicht umgesetztem Schüttgut und/oder des Produkts, welches durch vollständige oder zumindest zum Teil erfolgte Umsetzung des organischen Anteils des Schüttguts entstanden ist, aus dem Reaktionsraum unterhalb oder am unteren Ende der Schüttung, wobei das Schüttgut in dem Reaktionsraum durch das Abführen absteigend bewegt wird.

Das kontinuierliche oder intermittierende Bewegen der Schüttung gemäß Schritt b) kann, zumindest weitgehend, die gesamte Schüttung erfassen. Das Bewegen kann nur durch das Abführen am unteren Ende der Schüttung oder zusätzlich durch das Werkzeug und/oder beispielsweise durch Rütteln erfolgen. Das Abführen am unteren Ende der Schüttung kann dabei auch unten seitlich am Reaktionsraum erfolgen.

Das Bewegen gemäß Schritt b) und das Einblasen der Luft oder des Gasgemischs gemäß Schritt d) erfolgt dabei im Allgemeinen so, dass dadurch auf der Oberseite der Schüttung kein oder zumindest im Wesentlichen kein Staub aufgewirbelt wird. Das bedeutet, dass sich das mindestens eine Werkzeug entsprechend langsam durch die Schüttung bewegt und dass das Einblasen der Luft oder des Gasgemischs so dosiert wird, dass es nicht oder zumindest nicht wesentlich zu einer Staubaufwirbelung an der Oberseite der Schüttung kommt. Das kann dadurch gefördert werden, dass die Luft bzw. das Gasgemisch aus dem Werkzeug in Richtung der Unterseite der Schüttung in die Schüttung eingeblasen wird. Das entstehende Gas steigt durch die bei der Oxidation entstehende Wärme und das Ausleiten an der Gasauslassöffnung durch die Schüttung hindurch auf. Das entstehende Gas und die Schüttung des Schüttguts bewegen sich im Reaktionsraum also im Gegenstrom. Das Einblasen der Luft oder des Gasgemischs kann dadurch unterstützt und in der Menge geregelt werden, dass an der Gasauslassöffnung mittels eines Gebläses ein, insbesondere regulierbarer, Sog erzeugt wird.

Die Temperatur, auf die das Schüttgut erwärmt wird, so dass es zu einer Pyrolyse des organischen Anteils des Schüttguts kommt, beträgt üblicherweise mindestens 250°C. Die Temperatur kann beispielsweise durch einen elektrischen Heizstab, eine mittels Gas oder Öl beheizte Heizkammer oder durch Verbrennen des entstehenden Gases oberhalb der Schüttung erzeugt werden. Das Erwärmen des Schüttguts auf eine zur Pyrolyse des organischen Anteils des Schüttguts ausreichende Temperatur genügt, um durch das Einblasen der Luft oder des Gasgemischs eine Oxidation des organischen Anteils des Schüttguts zu bewirken und dadurch die Temperatur im Schüttgut zumindest aufrecht zu erhalten oder sogar zu erhöhen.

Das Verfahren ermöglicht eine autotherme Pyrolyse des organischen Anteils des Schüttguts, d. h. eine zur Durchführung der Pyrolyse erforderliche Energie muss nicht von außen durch eine Heizvorrichtung zugeführt werden sondern entsteht durch teilweise Oxidation des organischen Anteils des Schüttguts. Die zur Durchführung des Verfahrens erforderliche Vorrichtung kann dadurch wesentlich einfacher aufgebaut sein als die aus der DE 10 2005 026 764 B3 bekannte Anlage.

Zu Beginn der Durchführung des erfindungsgemäßen Verfahrens wird in der ersten Zeit nach der Erwärmung des Schüttguts Schüttgut mit nicht oder nicht vollständig umgesetztem organischem Anteil aus dem Reaktionsraum abgeführt. Dieses Schüttgut kann dem Reaktionsraum von oberhalb der Schüttung oder im oberen Viertel der Schüttung wieder zugeführt werden. Mit dem Schüttgut wird auch das auf der Oberseite der Schüttung erwärmte Schüttgut absteigend bewegt und führt dadurch in Kombination mit der unvollständigen Oxidation zu einer weiteren Wärmeerzeugung und Erwärmung von Schüttgut oder zumindest einer Aufrechterhaltung einer zur Pyrolyse ausreichenden Temperatur in tieferen Lagen der Schüttung. Die Geschwindigkeit, mit welcher die Schüttung in dem Reaktionsraum durch das Zuführen und Abführen gemäß Schritt e) absteigend bewegt wird und die Menge der eingeblasenen Luft bzw. des eingeblasenen Gasgemischs können so reguliert und aufeinander abgestimmt werden, dass der organische Anteil des Schüttguts bei seinem Durchlauf von der Oberseite der Schüttung bis zum unteren Ende der Schüttung durch eine Kombination von Vergasung und Pyrolyse vollständig umgesetzt wird.

Die Erfinder der vorliegenden Erfindung haben erkannt, dass es bei dem aus der DE 10 2005 026 764 B3 bekannten Verfahren zu einer ungleichmäßigen Durchströmung des Festbrennstoffs in der Reaktionskammer kommen kann. Dadurch kann es zu erheblichen Temperaturunterschieden innerhalb der Schüttung des Festbrennstoffs kommen. Bei dabei entstehenden Temperaturspitzen kann es zu einer partiellen Ascheerweichung oder sogar Ascheverglasung kommen. Durch die Versinterung des Festbrennstoffs kann es zu einer Klumpenbildung und/oder Verstopfung kommen. Die Verfügbarkeit von in dem entstehenden Pyrolyserückstand enthaltenen Phosphor für Pflanzen kann dadurch herabgesetzt sein. In Bereichen des Schüttguts kann es zu einer unterdurchschnittlichen Luft- und/oder Dampfzufuhr und damit zu einer unvollständigen Umsetzung des Festbrennstoffs kommen. Dadurch können organische Schadstoffe erhalten bleiben und nicht zuverlässig zerstört werden.

Durch das erfindungsgemäße Verfahren werden ein gleichmäßiger Eintrag der Luft oder des Gasgemischs und dadurch eine verhältnismäßig homogene Temperaturverteilung in der Schüttung erreicht. Dadurch ist es möglich, das Schüttgut bei verhältnismäßig geringer Temperatur im Bereich von 250 °C bis 850 °C, insbesondere 300 °C bis 800 °C, zu vergasen, ohne dass es dabei zu Temperaturspitzen und damit einer Ascheerweichung oder -verglasung kommt. Durch die permanente kontinuierliche oder intermittierende Bewegung des Werkzeugs kann es nicht zur ansonsten beim Einblasen von Luft oder Sauerstoff enthaltendem Gasgemisch erfolgender Bildung von Kanälen kommen, in denen es zu einer punktuellen Verbrennung des Schüttguts und dadurch zu Temperaturspitzen im Schüttgut kommt. Beim erfindungsgemäßen Verfahren kommt es durch das Bewegen in Kombination mit dem Lufteintrag zu einer partiellen Oxidation des Schüttguts. Dabei entsteht unter Vergasung des Schüttguts oder des organischen Anteils des Schüttguts Kohlenmonoxid und Wasserstoff. Das im Reaktionsraum aufsteigende entstehende heiße Gas unterstützt im oberen Teil des Reaktionsraums die Pyrolyse, bei der flüchtige Komponenten aus dem Schüttgut ausgetrieben werden.

Das entstehende Produkt ist verhältnismäßig homogen und weist eine gute Verfügbarkeit des darin enthaltenen Phosphors für Pflanzen auf. Das entstehende Gas kann in einer Brennkammer unter Entstehung von Verbrennungsgas verbrannt werden. Dabei kann eine Temperatur von mindestens 850°C erreicht werden. Das Verbrennungsgas kann mit einer Verweilzeit von mindestens zwei Sekunden bei dieser Temperatur gehalten werden, so dass dadurch die Vorgaben der Bundes-Immissionsschutzverordnungen erfüllt werden können.

Durch das erfindungsgemäße Verfahren ist ein gleichmäßiges Durchströmen des Schüttguts durch die Luft, das Gasgemisch und das entstehende Gas möglich, ohne dass das Schüttgut dazu in einem aufwendigen Verfahren pelletiert werden muss, um dadurch in einer Schüttung der Pellets ausreichend große Zwischenräume für das Durchströmen zu schaffen. Es genügt, wenn das Schüttgut in körniger oder sogar pulverförmiger Form vorliegt. Im Falle von Klärschlamm als Schüttgut kann dieser dazu so, wie er aus einer üblichen Trocknungsanlage kommt, eingesetzt werden, ohne dass es einer weiteren Aufarbeitung bedarf. Die für Klärschlamm charakteristische inhomogene Struktur, die bei herkömmlichen Festbettvergasungsverfahren beim Einblasen von Luft sowohl zur Kanalbildung als auch zu Verstopfungen und damit zu einem ungleichmäßigen Durchströmen führt, verhindert beim erfindungsgemäßen Verfahren nicht das verhältnismäßig gleichmäßige Durchströmen mit der Luft, dem Gasgemisch oder dem entstehenden Gas. Das Verfahren ist daher sowohl im Hinblick auf die Bereitstellung des dazu geeigneten Schüttguts als auch im Hinblick auf den apparativen Aufwand zur Bereitstellung der Vorrichtung zur Durchführung des Verfahrens verhältnismäßig wenig aufwendig und damit kostengünstig. Ein weiterer Vorteil des erfindungsgemäßen Verfahrens besteht darin, dass es eine hohe Betriebssicherheit aufweist, weil es durch die erzeugte hohe Homogenität des Schüttguts nicht zu Verklumpungen und damit einhergehenden Blockaden und ggf. einer plötzlichen unkontrollierten Lösung solcher Blockaden kommen kann.

Der für die Durchführung des erfindungsgemäßen Verfahrens verwendete Reaktionsraum kann bei einem horizontal durch den Reaktionsraum geführten Querschnitt zumindest im oberen Viertel der Schüttung eine verhältnismäßig große Querschnittsfläche aufweisen. Dadurch kann eine verhältnismäßig große Menge an eingeblasener Luft oder eingeblasenem Sauerstoff enthaltenden Gasgemisch mit verhältnismäßig geringer Strömungsgeschwindigkeit aus der Schüttung austreten. Dadurch kann ein Austrag von Staub und von Flugasche, zumindest weitgehend, vermieden werden. Als günstig hat sich dazu eine Querschnittsfläche von 0,1 bis 5 Quadratmeter, insbesondere von 0,2 bis 3 Quadratmeter, erwiesen.

Bei dem mindestens einen Werkzeug kann es sich beispielsweise um ein für ein langsames Drehen mit etwa 0,1 bis 5 Umdrehungen/Minute, insbesondere 0,2 bis 3 Umdrehungen/Minute, ausgelegtes Rührwerkzeug mit einer drehbaren hohlen Welle handeln, welche auf unterschiedlichen Ebenen jeweils mehrere innen hohle und gasleitend mit dem Inneren der hohlen Welle verbundene Rührpaddel aufweist. Durch Öffnungen in den Rührpaddeln kann über die hohle Welle mittels des Rührwerkzeugs während eines langsamen Rührens der Schüttung die Luft oder das sonstige Sauerstoff enthaltende Gasgemisch in die Schüttung eingeblasen werden. Alternativ kann das mindestens eine Werkzeug beispielsweise auch in Form eines Knethakens ausgebildet sein. Auch ein solches Rührwerkzeug kann innen hohl ausgebildet sein, so dass die Luft oder das Gasgemisch über Einblas-öffnungen im Rührwerkzeug in die Schüttung eingeblasen werden kann.

Das Werkzeug kann gleichzeitig dem Durchmischen des Schüttguts und dem Einblasen der Luft oder des Gasgemischs dienen. Die Bildung von Kanälen im Schüttgut, durch die sich die Luft oder das Gasgemisch ihren/seinen Weg sucht, wird dadurch zuverlässig verhindert.

Bei einer Ausgestaltung des Verfahrens weist der Reaktionsraum eine Höhe auf, welche gleich ist wie oder größer ist als dessen Durchmesser oder maximale Diagonale bei einem horizontal durch den Reaktionsraum geführten Querschnitt. Der Querschnitt kann dabei in der Mitte der vertikalen Erstreckung des Reaktionsraums geführt werden. Beispielsweise hat sich eine Höhe im Bereich von 0,3 bis 10 m, insbesondere von 0,5 bis 5 m, bei einem Durchmesser oder einer maximalen Diagonale im Bereich von 0,3 bis 3 m, insbesondere von 0,5 bis 2 m, als günstig erwiesen.
Bei dem Verfahren kann sich der Reaktionsraum zumindest in einem Abschnitt nach unten hin verjüngen. Dadurch kann sich bei einem jeweils horizontal geführten Querschnitt die Querschnittsfläche der Schüttung von oben nach unten verringern. Dadurch kann das der Schüttung des Schüttguts zur Verfügung stehende Volumen an die Volumenabnahme durch die zunehmende Vergasung und Pyrolyse angepasst werden. Auf diese Art und Weise kann eine möglicherwiese zu einer ungleichmäßigen Durchmischung des Schüttguts führende ungleichmäßig absteigende Bewegung des Schüttguts in dem Reaktionsraum verhindert werden. Ein weiterer Vorteil einer sich von oben nach unten verringernden Querschnittsfläche besteht darin, dass sich dadurch die Geschwindigkeit des Aufstiegs des sich in der Schüttung aufsteigend bewegenden entstehenden Gases trotz zunehmender Gasmenge nicht wesentlich erhöht. Dadurch kann ein mit der erhöhten Geschwindigkeit einhergehender erhöhter Staubaustrag aus der Schüttung vermieden werden.

Bei einer Ausgestaltung des erfindungsgemäßen Verfahrens erfolgt/erfolgen das Einblasen gemäß Schritt d) und/oder das Zuführen und/oder das Abführen gemäß Schritt e) kontinuierlich oder intermittierend. Dabei ist es möglich, das Einblasen, das Zuführen und das Abführen so aufeinander abzustimmen, dass der organisehe Anteil des Schüttguts bei der absteigenden Bewegung im Reaktionsraum vollständig umgesetzt wird, so dass nur durch vollständige Umsetzung des organischen Anteils des Schüttguts entstandenes Produkt verbleibt.

Bei einer Ausgestaltung des erfindungsgemäßen Verfahrens wird über die mindestens eine Einblasöffnung oder mindestens eine weitere optional in dem Werkzeug angeordnete Einblasöffnung Wasserdampf in die Schüttung eingeblasen. Dadurch kann sogenanntes Wassergas, also ein Gemisch aus Kohlenmonoxid und Wasserstoff, erzeugt werden. Das Einblasen des Wasserdampfs kann kontinuierlich oder intermittierend erfolgen.

Das Einblasen der Luft, des Gasgemischs und/oder des Wasserdampfs kann auf einer Mehrzahl von Ebenen innerhalb der Schüttung erfolgen. Die Luft, das Gasgemisch und/oder der Wasserdampf kann/können dann in Abhängigkeit von der Ebene der Schüttung, in welcher das Einblasen der Luft, des Gasgemischs und/oder des Wasserdampfs erfolgt, jeweils in unterschiedlicher Menge eingeblasen werden. Dadurch ist es möglich, in einer Ebene der Schüttung, in welcher eine Umsetzungsrate des Schüttguts zu gering oder zu hoch ist, die Umsetzungsrate durch Erhöhen oder Erniedrigen der Menge eingeblasener Luft, eingeblasenen Gasgemischs und/oder eingeblasenen Wasserdampfs zu erhöhen oder zu verringern.

Bei einer Ausgestaltung des erfindungsgemäßen Verfahrens ist das mindestens eine Werkzeug ein Bewegungswerkzeug zum Bewegen des Schüttguts oder ein Rührwerkzeug zum Rühren des Schüttguts, wobei das Rührwerkzeug eine im Wesentlichen vertikal ausgerichtete Drehachse aufweisen kann. Der Vorteil des Rührwerkzeugs besteht darin, dass zum Drehen des Rührwerkzeugs nur eine einzige Antriebsvorrichtung erforderlich ist und damit die gesamte Schüttung bewegt werden kann. Das Drehen kann dabei sehr langsam, z. B. mit 0,1 bis 5, insbesondere 0,2 bis 3, Umdrehungen/Minute, erfolgen. Dadurch kann ein Verschleiß des Rührwerkzeugs durch Reibung am Schüttgut gering gehalten werden.

Im Reaktionsraum kann zum Erreichen einer besseren Durchmischung durch Scherkräfte mindestens ein Stator angeordnet sein, welcher in den Reaktionsraum so hineinragt, dass er von dem mindestens einen Rührwerkzeug beim Rühren nicht berührt wird.

Bei einer Ausgestaltung des Verfahrens weist das Rührwerkzeug eine in den Reaktionsraum hineinragende Welle auf, so dass das Schüttgut beim Rühren des Schüttguts in einem zwischen der Welle und einer Wandung des Reaktionsraums gebildeten Ringspalt bewegt wird, wobei der Ringspalt eine Höhe aufweist, die gleich ist wie oder größer ist als eine Spaltweite des Ringspalts.

Bei dem Schüttgut kann es sich um zumindest teilweise getrockneten Klärschlamm handeln. Dieser fällt in großer Menge an, welche ansonsten anderweitig und zumeist unter Verlust des für Pflanzen verwertbaren Phosphors entsorgt werden müsste.

Der Reaktionsraum kann direkt oberhalb eines für die Schüttung vorgesehenen Bereichs des Reaktionsraums einen Brennraum umfassen, welchem Luft und/oder ein/das sonstige(s) sauerstoffenthaltende(s) Gasgemisch zugeführt wird. Dabei wird das in den Brennraum aufsteigende entstehende Gas im Brennraum entzündet, wenn es sich nicht bereits entzündet hat. "Direkt oberhalb der Schüttung" bedeutet dabei, dass der Brennraum so oberhalb der Schüttung angeordnet ist, dass die bei der Verbrennung des entstandenen Gases entstehende Strahlungswärme direkt auf die Schüttung strahlt. Dadurch wird das Schüttgut erwärmt und der organische Anteil des Schüttguts pyrolysiert. Durch die kontinuierliche Bewegung der Schüttung kommt es jedoch zu keiner lokalen Überhitzung des Schüttguts, so dass auch dadurch das Schüttgut nicht auf eine Temperatur über einer maximalen Solltemperatur erwärmt wird. Die maximale Solltemperatur kann im Bereich von 300 °C bis 850 °C, insbesondere 300 °C bis 800 °C, festgelegt werden. Ein bei der Verbrennung im Brennraum entstehendes Verbrennungsgas kann durch die Gasauslassöffnung und/oder eine zusätzlich vorgesehene Verbrennungsgasöffnung entweichen.

Im mindestens einen Werkzeug und/oder im Reaktionsraum und/oder im mindestens einen Stator kann mindestens jeweils ein Temperatursensor angeordnet sein, welcher eine Temperatur in der Schüttung erfasst, wobei in Abhängigkeit von der gemessenen Temperatur die einzublasende Menge der Luft, des Gasgemischs und/oder des Wasserdampfs so geregelt wird, dass eine vorgegebene maximale Temperatur nicht überschritten wird. Die vorgegebene maximale Temperatur kann im Bereich von 300 °C bis 850 °C, insbesondere 300 °C bis 800 °C, liegen. Es ist auch möglich, dass in dem Werkzeug/den Werkzeugen und/oder im Reaktionsraum und/oder in dem Stator/den Statoren mehrere Temperatursensoren angeordnet sind, welche eine jeweilige Temperatur in unterschiedlichen Bereichen der Schüttung erfassen, wobei in Abhängigkeit von der jeweils gemessenen Temperatur die einzublasende Menge der Luft, des Gasgemischs und/oder des Wasserdampfs so geregelt wird, dass die Temperatur an keiner Stelle des Reaktionsraums die vorgegebene maximale Temperatur übersteigt. Durch die Mehrzahl der Temperatursensoren ist es auch möglich, in Abhängigkeit von der jeweils gemessenen Temperatur die einzublasende Menge der Luft, des Gasgemischs und/oder des Wasserdampfs so zu regeln, dass auf unterschiedlichen Ebenen der Schüttung eine unterschiedliche Temperatur eingestellt werden kann und/oder die Temperatur auf unterschiedlichen Ebenen der Schüttung unabhängig voneinander geregelt werden kann.

Die Erfindung betrifft weiterhin eine Vorrichtung zur Durchführung eines erfindungsgemäßen Verfahrens, umfassend
a) einen Reaktor mit einem Reaktionsraum,
b) mindestens eine Zuführvorrichtung mit einer Zuführöffnung zum Zuführen eines Schüttguts zumindest teilweise organischen Ursprungs in den Reaktionsraum, wobei die Zuführöffnung bei bestimmungsgemäßem Gebrauch oben am Reaktionsraum oder im oberen Viertel des Reaktionsraums oder im oberen Viertel eines für die Aufnahme der Schüttung vorgesehenen Bereichs des Reaktionsraums angeordnet ist,
c) mindestens eine Abführvorrichtung mit einer Abführöffnung zum Abführen von Schüttgut mit nicht umgesetztem organischem Anteil und/oder eines bei einer Reaktion im Reaktionsraum entstehenden Produkts aus dem Reaktionsraum, wobei die Abführöffnung bei bestimmungsgemäßem Gebrauch unten am Reaktionsraum oder am unteren Ende eines für die Aufnahme der Schüttung vorgesehenen Bereichs des Reaktionsraums angeordnet ist,
d) mindestens ein Werkzeug mit einer Antriebsvorrichtung, wobei das Werkzeug mit der Antriebsvorrichtung so ausgestaltet ist, dass es sich kontinuierlich oder intermittierend durch die in den Reaktionsraum einzubringende Schüttung des Schüttguts bewegen kann,
e) mindestens eine Einblasöffnung in dem Werkzeug zum Einblasen von Luft oder eines sonstigen Sauerstoff enthaltenden Gasgemischs in die Schüttung,
f) mindestens eine Gasauslassöffnung, die bei bestimmungsgemäßem Gebrauch oben am Reaktionsraum oder im oberen Viertel des Reaktionsraums oder im oberen Viertel eines für die Aufnahme der Schüttung vorgesehenen Bereichs des Reaktionsraums angeordnet ist, und
g) mindestens eine Regelungsvorrichtung zum Regeln der Menge der einzublasenden Luft oder des einzublasenden Gasgemischs.

Das untere Ende, an dem die Abführöffnung angeordnet ist, kann sich dabei auch unten seitlich am Reaktionsraum befinden. Das mindestens eine Werkzeug kann als Werkzeug zum Bewegen der Schüttung, z. B. als Rührpaddel, ausgestaltet sein. Die Vorrichtung kann auch einzeln oder in Kombination sämtliche weitere im Zusammenhang mit dem erfindungsgemäßen Verfahren genannte Vorrichtungsmerkmale aufweisen.

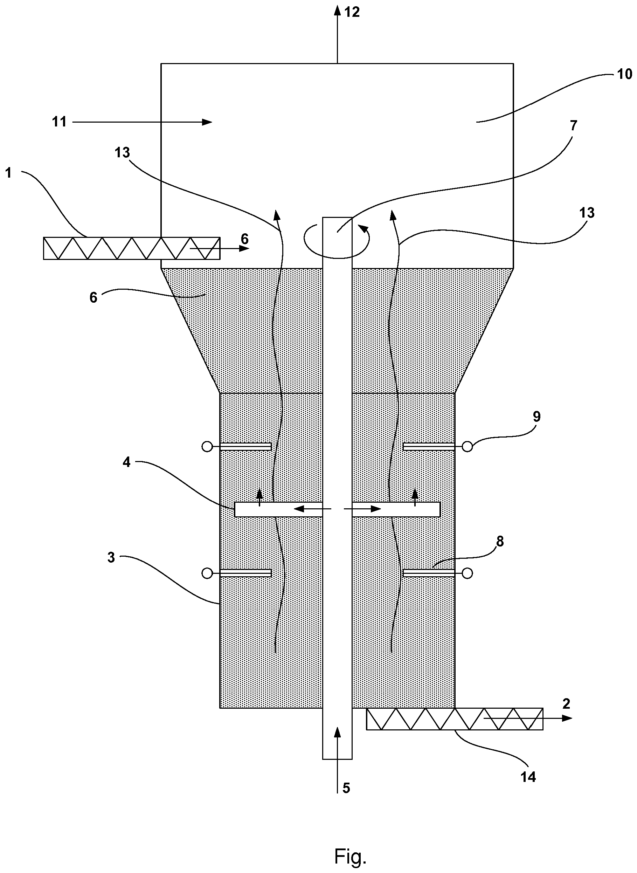

Nachfolgend wird die Erfindung anhand eines Ausführungsbeispiels und der Figur näher erläutert.

Die Figur zeigt eine erfindungsgemäße Vorrichtung mit einem Brennraum oberhalb des für die Aufnahme der Schüttung vorgesehenen Bereichs des Reaktionsraums.

In der Figur ist ein Reaktor 3 mit einem darin enthaltenem Reaktionsraum dargestellt. In dem Reaktionsraum ist eine Schüttung des Schüttguts 6 organischen Ursprungs eingebracht. In den Reaktionsraum ragen Statoren 8 hinein. In den Statoren 8 sind Temperatursensoren 9 angeordnet, um die Temperatur der Schüttung des Schüttguts 6 jeweils im Bereich der Statoren 8 zu erfassen. In die Schüttung ragt ein Rührwerkzeug 4 mit Rührpaddeln und einer hohlen Welle 7 hinein. Die Welle 7 wird von einer hier nicht dargestellten Drehvorrichtung angetrieben und dadurch kontinuierlich gedreht, so dass dadurch eine kontinuierliche Bewegung der Schüttung bewirkt wird. Über die Welle 7 und die gasleitend damit verbundenen Rührpaddel wird Luft 5 und/oder Wasserdampf in die Schüttung des Schüttguts 6 eingeblasen. Das Schüttgut 6 wird zunächst auf der Oberseite der Schüttung mittels eines hier nicht dargestellten Brenners auf eine Temperatur von etwa 250°C bis 300°C erwärmt. Dabei werden in dem Schüttgut gegebenenfalls enthaltenes Wasser und sonstige flüchtige Stoffe durch Pyrolyse ausgetrieben. Durch das Einblasen der Luft 5 und/oder des Wasserdampfs kommt es zu einer unvollständigen Oxidation mit damit einhergehender Wärmeerzeugung und Vergasung des Schüttguts 6. Mittels der Abführvorrichtung 14 werden/wird kontinuierlich oder intermittierend noch nicht umgesetztes Schüttgut 6 und/oder Produkt 2, welches durch vollständige oder zumindest zum Teil erfolgte Umsetzung des Schüttguts 6 entstanden ist, aus dem Reaktionsraum abgeführt. Durch die Zuführvorrichtung 1 wird dem Reaktionsraum kontinuierlich oder intermittierend Schüttgut 6 auf der Oberseite der Schüttung zugeführt. So entsteht eine absteigende Bewegung des Schüttguts 6. An der Oberseite pyrolysiertes Schüttgut 6 wandert dadurch durch die Schüttung in Richtung zur Unterseite der Schüttung. Durch die Vergasung und Pyrolyse entstehendes heißes Gas 13 steigt im Gegenstrom zum Schüttgut 6 durch die Schüttung auf und bewirkt dadurch eine Erwärmung und Pyrolyse des Schüttguts 6. Es entsteht ein durch die Schüttung aufsteigender heißer Gasstrom. Es kommt aber nicht zu einer Entzündung des Schüttguts 6.

Das in den Brennraum 10 des Reaktionsraums aufsteigende Gas 13 wird im Brennraum 10 unter Zuführung von weiterer Luft 11 entzündet und brennt dort ab. Dabei entstehende Strahlungswärme erwärmt die Schüttung des Schüttguts 6 auf der Oberseite. Bei der Verbrennung entstehendes Verbrennungsgas 12 entweicht durch eine hier nicht dargestellte Gasauslassöffnung auf der Oberseite oder seitlich des Brennraums 10.

### Bezugszeichenliste

- 1: Zuführvorrichtung
- 2: Produkt
- 3: Reaktor
- 4: Rührwerkzeug
- 5: Luft
- 6: Schüttgut
- 7: Welle
- 8: Stator
- 9: Temperatursensor
- 10: Brennraum
- 11: weitere Luft
- 12: Verbrennungsgas
- 13: Gas
- 14: Abführvorrichtung

## Patentansprüche

1. Verfahren zur Gewinnung eines Phosphor in für Pflanzen verwertbarer Form enthaltenden Produkts (2) beim Vergasen eines Schüttguts (6) zumindest teilweise organischen Ursprungs unter zumindest partieller Oxidation eines organischen Anteils des Schüttguts (6) mit folgenden Schritten:
a) Einbringen einer Schüttung des Schüttguts (6) in einen Reaktionsraum eines Reaktors (3),
b) kontinuierliches oder intermittierendes Bewegen der Schüttung,
c) Erwärmen des Schüttguts (6) auf der Oberseite der Schüttung auf eine Temperatur, bei der es zu einer Pyrolyse des organischen Anteils des Schüttguts kommt,
d) Einblasen von Luft (5) oder eines sonstigen Sauerstoff enthaltenden Gasgemischs über mindestens eine Einblasöffnung in mindestens einem sich kontinuierlich oder intermittierend durch die Schüttung bewegenden Werkzeug in die Schüttung, wobei die Luft (5), das Gasgemisch, entstehendes Gas (13) und/oder durch dessen Verbrennung oberhalb der Schüttung entstehendes Verbrennungsgas (12) über mindestens eine Gasauslassöffnung oberhalb der Schüttung oder die Luft (5), das Gasgemisch und/oder entstehendes Gas (13) über mindestens eine Gasauslassöffnung im oberen Viertel der Schüttung aus dem Reaktionsraum ausgeleitet wird, wobei sich das entstehende Gas in der Schüttung aufsteigend bewegt, wobei das Einblasen der Luft (5) oder des sonstigen Sauerstoff enthaltenden Gasgemischs so geregelt wird, dass die Menge an Luft (5) oder des Gasgemischs nur zu einer unvollständigen Oxidation des organischen Anteils des Schüttguts (6) im Reaktionsraum ausreicht, und
e) Zuführen des Schüttguts (6) in den Reaktionsraum von oberhalb oder im oberen Viertel der Schüttung und Abführen von nicht umgesetztem Schüttgut (6) und/oder des Produkts (2), welches durch vollständige oder zumindest zum Teil erfolgte Umsetzung des organischen Anteils des Schüttguts (6) entstanden ist, aus dem Reaktionsraum unterhalb oder am unteren Ende der Schüttung, wobei das Schüttgut in dem Reaktionsraum durch das Abführen absteigend bewegt wird.

2. Verfahren nach Anspruch 1, wobei der Reaktionsraum eine Höhe aufweist, welche größer ist als dessen Durchmesser oder maximale Diagonale bei einem horizontal durch den Reaktionsraum geführten Querschnitt.

3. Verfahren nach einem der vorhergehenden Ansprüche, wobei sich der Reaktionsraum zumindest in einem Abschnitt nach unten hin verjüngt.

4. Verfahren nach einem der vorhergehenden Ansprüche, wobei das Einblasen gemäß Schritt d) und/oder das Zuführen und/oder das Abführen gemäß Schritt e) kontinuierlich oder intermittierend erfolgt/erfolgen.

5. Verfahren nach einem der vorhergehenden Ansprüche, wobei über die mindestens eine Einblasöffnung oder mindestens eine weitere optional in dem Werkzeug angeordnete Einblasöffnung Wasserdampf in die Schüttung eingeblasen wird.

6. Verfahren nach einem der vorhergehenden Ansprüche, wobei das Einblasen der Luft (5), des Gasgemischs und/oder des Wasserdampfs auf einer Mehrzahl von Ebenen innerhalb der Schüttung erfolgt.

7. Verfahren nach Anspruch 6, wobei die Luft (5), das Gasgemisch und/oder der Wasserdampf in Abhängigkeit von der Ebene der Schüttung, in welcher das Einblasen der Luft (5), des Gasgemischs und/oder des Wasserdampfs erfolgt, jeweils in unterschiedlicher Menge eingeblasen wird/werden.

8. Verfahren nach einem der vorhergehenden Ansprüche, wobei das mindestens eine Werkzeug ein Bewegungswerkzeug zum Bewegen des Schüttguts (6) oder ein Rührwerkzeug (4) zum Rühren des Schüttguts (6) ist.

9. Verfahren nach Anspruch 8, wobei im Reaktionsraum mindestens ein Stator (8) angeordnet ist, welcher so in den Reaktionsraum hineinragt, dass er von dem Rührwerkzeug beim Rühren nicht berührt wird.

10. Verfahren nach Anspruch 8 oder 9, wobei das Rührwerkzeug (4) eine in den Reaktionsraum hineinragende Welle (7) aufweist, so dass das Schüttgut (6) beim Rühren des Schüttguts (6) in einem zwischen der Welle (7) und einer Wandung des Reaktionsraums gebildeten Ringspalt bewegt wird, wobei der Ringspalt eine Höhe aufweist, die gleich ist wie oder größer ist als eine Spaltweite des Ringspalts.

11. Verfahren nach einem der vorhergehenden Ansprüche, wobei es sich bei dem Schüttgut (6) um zumindest teilweise getrockneten Klärschlamm handelt.

12. Verfahren nach einem der vorhergehenden Ansprüche, wobei der Reaktionsraum direkt oberhalb eines für die Schüttung vorgesehenen Bereichs des Reaktionsraums einen Brennraum (10) umfasst, welchem Luft (5) oder ein/das sonstige(s) Sauerstoff enthaltende(s) Gasgemisch zugeführt wird, wobei das in den Brennraum (10) aufsteigende entstehende Gas im Brennraum (10) entzündet wird, wenn es sich nicht bereits entzündet hat.

13. Verfahren nach einem der vorhergehenden Ansprüche, wobei im mindestens einen Werkzeug und/oder im Reaktionsraum und/oder im mindestens einen Stator (8) mindestens jeweils ein Temperatursensor (9) angeordnet ist, welcher eine Temperatur in der Schüttung erfasst, wobei in Abhängigkeit von der gemessenen Temperatur die einzublasende Menge der Luft (5), des Gasgemischs und/oder des Wasserdampfs so geregelt wird, dass eine vorgegebene maximale Temperatur nicht überschritten wird.

14. Vorrichtung zur Durchführung eines Verfahrens nach einem der vorhergehenden Ansprüche, umfassend
a) einen Reaktor (3) mit einem Reaktionsraum,
b) mindestens eine Zuführvorrichtung (1) mit einer Zuführöffnung zum Zuführen eines Schüttguts (6) zumindest teilweise organischen Ursprungs in den Reaktionsraum, wobei die Zuführöffnung bei bestimmungsgemäßem Gebrauch oben am Reaktionsraum oder im oberen Viertel des Reaktionsraums oder im oberen Viertel eines für die Aufnahme der Schüttung vorgesehenen Bereichs des Reaktionsraums angeordnet ist,
c) mindestens eine Abführvorrichtung (14) mit einer Abführöffnung zum Abführen von Schüttgut (6) mit nicht umgesetztem organischem Anteil und/oder eines bei einer Reaktion im Reaktionsraum entstehenden Produkts (2) aus dem Reaktionsraum, wobei die Abführöffnung bei bestimmungsgemäßem Gebrauch unten am Reaktionsraum oder am unteren Ende eines für die Aufnahme der Schüttung vorgesehenen Bereichs des Reaktionsraums angeordnet ist,
d) mindestens ein Werkzeug mit einer Antriebsvorrichtung, wobei das Werkzeug mit der Antriebsvorrichtung so ausgestattet ist, dass es sich kontinuierlich oder intermittierend durch die in den Reaktionsraum einzubringende Schüttung des Schüttguts (6) bewegen kann,
e) mindestens eine Einblasöffnung in dem Werkzeug zum Einblasen von Luft (5) oder eines sonstigen Sauerstoff enthaltenden Gasgemischs in die Schüttung,
f) mindestens eine Gasauslassöffnung, die bei bestimmungsgemäßem Gebrauch oben am Reaktionsraum oder im oberen Viertel des Reaktionsraums oder im oberen Viertel eines für die Aufnahme der Schüttung vorgesehenen Bereichs des Reaktionsraums angeordnet ist, und
g) mindestens eine Regelungsvorrichtung zum Regeln der Menge der einzublasenden Luft (5) oder des einzublasenden Gasgemischs.

15. Vorrichtung nach Anspruch 14, wobei das mindestens eine Werkzeug als Werkzeug zum Bewegen der Schüttung ausgestaltet ist.

## Claims

1. A method for obtaining a product (2) which contains phosphorus in a form which can be used by plants when gasifying a bulk product (6) of at least partly organic origin accompanied by at least partial oxidation of an organic portion of the bulk product (6), with the following steps:
a) introducing a charge of the bulk product (6) into a reaction chamber of a reactor (3),
b) continuous or intermittent movement of the charge,
c) heating the bulk product (6) on the top side of the charge to a temperature at which the pyrolysis of the organic portion of the bulk product occurs,
d) blowing, into the charge, air (5) or another gas mixture which contains oxygen via at least one blow-in opening in at least one tool moving continuously or intermittently through the charge, wherein the air (5), the gas mixture, resulting gas (13) and/or combustion gas (12) resulting from the combustion thereof above the charge is conducted out of the reaction chamber via at least one gas outlet opening above the charge or the air (5), the gas mixture and/or resulting gas (13) is conducted out of the reaction chamber via at least one gas outlet opening in the upper quarter of the charge, wherein the resulting gas moves upwards in the charge, wherein the blowing-in of the air (5) or the other gas mixture which contains oxygen is regulated such that the quantity of air (5) or gas mixture is sufficient only for an incomplete oxidation of the organic portion of the bulk product (6) in the reaction chamber, and
e) feeding the bulk product (6) into the reaction chamber from above or in the upper quarter of the charge and discharging unconverted bulk product (6) and/or product (2) which has resulted from incomplete or at least partial conversion of the organic portion of the bulk product (6) from the reaction chamber below or at the bottom end of the charge, wherein the bulk product is moved downwards in the reaction chamber by being discharged.

2. The method according to claim 1, wherein the reaction chamber has a height which is greater than its diameter or maximum diagonal at a cross-section guided horizontally through the reaction chamber.

3. The method according to one of the preceding claims, wherein the reaction chamber tapers downwards at least in one section.

4. The method according to one of the preceding claims, wherein blowing-in according to step d) and/or feeding and/or discharging according to step e) takes place/take place continuously or intermittently.

5. The method according to one of the preceding claims, wherein water vapor is blown into the charge via the at least one blow-in opening or at least one further blow-in opening arranged optionally in the tool.

6. The method according to one of the preceding claims, wherein the air (5), the gas mixture and/or the water vapor is blown in on a plurality of levels within the charge.

7. The method according to claim 6, wherein the air (5), the gas mixture and/or the water vapor is/are blown in each in different quantities depending on the level of the charge in which the air (5), the gas mixture and/or the water vapor is blown in.

8. The method according to one of the preceding claims, wherein the at least one tool is a movement tool for moving the bulk product (6) or a stirring tool (4) for stirring the bulk product (6).

9. The method according to claim 8, wherein at least one stator (8) is arranged in the reaction chamber, which stator extends into the reaction chamber such that it is not touched by the stirring tool during stirring.

10. The method according to claim 8 or 9, wherein the stirring tool (4) has a shaft (7) extending into the reaction chamber, with the result that the bulk product (6) is moved in an annular gap formed between the shaft (7) and a wall of the reaction chamber when the bulk product (6) is stirred, wherein the annular gap has a height which is the same as or greater than a gap width of the annular gap.

11. The method according to one of the preceding claims, wherein the bulk product (6) is at least partly dried sewage sludge.

12. The method according to one of the preceding claims, wherein the reaction chamber comprises a combustion chamber (10) directly above a region of the reaction chamber provided for the charge to which is fed air (5) or another/the other gas mixture containing oxygen, wherein the resulting gas moving upwards in the combustion chamber (10) is ignited in the combustion chamber (10) if it has not already ignited.

13. The method according to one of the preceding claims, wherein at least one temperature sensor (9) is arranged in each of the at least one tool and/or in the reaction chamber and/or in the at least one stator (8), which temperature sensor detects a temperature in the charge wherein, depending on the measured temperature, the quantity of the air (5), the gas mixture and/or the water vapor to be blown in is regulated such that a predetermined maximum temperature is not exceeded.

14. A device for carrying out a method according to one of the preceding claims, comprising
a) a reactor (3) with a reaction chamber,
b) at least one feed device (1) with a feed opening for feeding a bulk product (6) of at least partly organic origin into the reaction chamber wherein, during normal use, the feed opening is arranged at the top of the reaction chamber or in the upper quarter of the reaction chamber or in the upper quarter of a region of the reaction chamber provided for receiving the charge,
c) at least one discharge device (14) with a discharge opening for discharging, out of the reaction chamber, bulk product (6) with an unconverted organic portion and/or a product (2) resulting from a reaction in the reaction chamber wherein, during normal use, the discharge opening is arranged at the bottom of the reaction chamber or at the bottom end of a region of the reaction chamber provided for receiving the charge,
d) at least one tool with a drive device, wherein the tool with the drive device is equipped such that it can move continuously or intermittently through the charge of the bulk product (6) to be introduced into the reaction chamber,
e) at least one blow-in opening in the tool for blowing air (5) or another gas mixture which contains oxygen into the charge,
f) at least one gas outlet opening which, during normal use, is arranged at the top of the reaction chamber or in the upper quarter of the reaction chamber or in the upper quarter of a region of the reaction chamber provided for receiving the charge, and
g) at least one regulating device for regulating the quantity of the air (5) to be blown in or of the gas mixture to be blown in.

15. The device according to claim 14, wherein the at least one tool is designed as a tool for moving the charge.

## Revendications

1. Procédé d'obtention d'un produit (2) contenant du phosphore sous forme exploitable pour des plantes lors de la gazéification d'une matière en vrac (6) d'origine au moins partiellement organique avec oxydation au moins partielle d'une portion organique de la matière en vrac (6) avec les étapes suivantes:
a) introduction d'une charge de la matière en vrac (6) dans un espace réactionnel d'un réacteur (3),
b) mouvement continu ou intermittent de la charge,
c) réchauffement de la matière en vrac (6) sur le côté supérieur de la charge à une température à laquelle il en vient à une pyrolyse de la portion organique de la matière en vrac,
d) insufflation d'air (5) ou d'un autre mélange gazeux contenant de l'oxygène dans la charge par le biais d'au moins une ouverture d'insufflation dans au moins un outil se mouvant de manière continue ou intermittente à travers la charge, dans lequel l'air (5), le mélange gazeux, du gaz (13) qui apparaît et/ou du gaz de combustion (12) apparaissant au-dessus de la charge par sa combustion est dévié de l'espace réactionnel par le biais d'au moins une ouverture de sortie gazeuse au-dessus de la charge ou l'air (5), le mélange gazeux et/ou du gaz (13) qui apparaît est dévié de l'espace réactionnel par le biais d'au moins une ouverture de sortie gazeuse dans le quart supérieur de la charge, dans lequel le gaz qui apparaît se meut de manière ascendante dans la charge, dans lequel l'insufflation de l'air (5) ou de l'autre mélange gazeux contenant de l'oxygène est régulée de sorte que la quantité d'air (5) ou du mélange gazeux ne suffit qu'à une oxydation incomplète de la portion organique de la matière en vrac (6) dans l'espace réactionnel, et
e) amenée de la matière en vrac (6) dans l'espace réactionnel du dessus ou dans le quart supérieur de la charge et évacuation de matière en vrac non transformée (6) et/ou du produit (2) qui est apparu par transformation complète ou au moins partiellement effectuée de la portion organique de la matière en vrac (6) de l'espace réactionnel en dessous ou à l'extrémité inférieure de la charge, dans lequel la matière en vrac est mue de manière descendante dans l'espace réactionnel par l'évacuation.

2. Procédé selon la revendication 1, dans lequel l'espace réactionnel présente une hauteur qui est supérieure à son diamètre ou sa diagonale maximale dans le cas d'une coupe transversale menée horizontalement à travers l'espace réactionnel.

3. Procédé selon une des revendications précédentes, dans lequel l'espace réactionnel se rétrécit vers le bas au moins dans une section.

4. Procédé selon une des revendications précédentes, dans lequel l'insufflation selon l'étape d) et/ou l'amenée et/ou l'évacuation selon l'étape e) s'effectue(nt) de manière continue ou intermittente.

5. Procédé selon une des revendications précédentes, dans lequel de la vapeur d'eau est insufflée dans la charge par le biais de l'au moins une ouverture d'insufflation ou d'au moins une autre ouverture d'insufflation disposée en option dans l'outil.

6. Procédé selon une des revendications précédentes, dans lequel l'insufflation de l'air (5), du mélange gazeux et/ou de la vapeur d'eau s'effectue sur une pluralité de plans au sein de la charge.

7. Procédé selon la revendication 6, dans lequel l'air (5), le mélange gazeux et/ou la vapeur d'eau est/sont insufflé(s) à chaque fois en quantité différente en fonction du plan de la charge dans lequel l'insufflation de l'air (5), du mélange gazeux et/ou de la vapeur d'eau s'effectue.

8. Procédé selon une des revendications précédentes, dans lequel l'au moins un outil est un outil de mouvement pour le mouvement de la matière en vrac (6) ou un outil d'agitation (4) pour l'agitation de la matière en vrac (6).

9. Procédé selon la revendication 8, dans lequel au moins un stator (8) est disposé dans l'espace réactionnel, lequel avance dans l'espace réactionnel de sorte qu'il n'est pas touché par l'outil d'agitation lors de l'agitation.

10. Procédé selon la revendication 8 ou 9, dans lequel l'outil d'agitation (4) présente un arbre (7) avançant dans l'espace réactionnel de sorte que la matière en vrac (6) est mue lors de l'agitation de la matière en vrac (6) dans un espace annulaire formé entre l'arbre (7) et une paroi de l'espace réactionnel, dans lequel l'espace annulaire présente une hauteur qui est supérieure ou égale à un écartement de fente de l'espace annulaire.

11. Procédé selon une des revendications précédentes, dans lequel il s'agit pour la matière en vrac (6) de boues de curage au moins partiellement séchées.

12. Procédé selon une des revendications précédentes, dans lequel l'espace réactionnel comprend directement au-dessus d'une région de l'espace réactionnel prévue pour la charge un espace de combustion (10) auquel de l'air (5) ou un/l'autre mélange gazeux contenant de l'oxygène est amené, dans lequel le gaz apparaissant de manière ascendante dans l'espace de combustion (10) est allumé dans l'espace de combustion (10) lorsqu'il ne s'est pas déjà allumé.

13. Procédé selon une des revendications précédentes, dans lequel au moins à chaque fois un capteur de température (9) qui détecte une température dans la charge est disposé dans l'au moins un outil et/ou dans l'espace réactionnel et/ou dans l'au moins un stator (8), dans lequel la quantité à insuffler de l'air (5), du mélange gazeux et/ou de la vapeur d'eau est régulée en fonction de la température mesurée de sorte qu'une température maximale prédéfinie n'est pas dépassée.

14. Dispositif pour la réalisation d'un procédé selon une des revendications précédentes, comprenant
a) un réacteur (3) avec un espace réactionnel,
b) au moins un dispositif d'amenée (1) avec une ouverture d'amenée pour l'amenée d'une matière en vrac (6) d'origine au moins partiellement organique dans l'espace réactionnel, dans lequel l'ouverture d'amenée est disposée en cas d'usage conforme à sa destination en haut de l'espace réactionnel ou dans le quart supérieur de l'espace réactionnel ou dans le quart supérieur d'une région de l'espace réactionnel prévue pour la réception de la charge,
c) au moins un dispositif d'évacuation (14) avec une ouverture d'évacuation pour l'évacuation de l'espace réactionnel de matière en vrac (6) avec une portion organique non transformée et/ou d'un produit (2) apparaissant lors d'une réaction dans l'espace réactionnel, dans lequel l'ouverture d'évacuation est disposée en cas d'usage conforme à sa destination en bas de l'espace réactionnel ou à l'extrémité inférieure d'une région de l'espace réactionnel prévue pour la réception de la charge,
d) au moins un outil avec un dispositif d'entraînement, dans lequel l'outil est équipé du dispositif d'entraînement de sorte qu'il peut se mouvoir de manière continue ou intermittente à travers la charge de la matière en vrac (6) à introduire dans l'espace réactionnel,
e) au moins une ouverture d'insufflation dans l'outil pour l'insufflation d'air (5) ou d'un autre mélange gazeux contenant de l'oxygène dans la charge,
f) au moins une ouverture de sortie gazeuse qui est disposée en cas d'usage conforme à sa destination en haut de l'espace réactionnel ou dans le quart supérieur de l'espace réactionnel ou dans le quart supérieur d'une région de l'espace réactionnel prévue pour la réception de la charge, et
g) au moins un dispositif de régulation pour la régulation de la quantité de l'air à insuffler (5) ou du mélange gazeux à insuffler.

15. Dispositif selon la revendication 14, dans lequel l'au moins un outil est configuré comme outil pour le mouvement de la charge.
